# FASCICULE DE BREVET EUROPEEN

(11) **EP 0 847 130 B1**
(45) Date de publication et mention de la délivrance du brevet: **19.03.2003**
(21) Numéro de dépôt: 96119434.7
(22) Date de dépôt: 04.12.1996
(51) Int. Cl.: H02K 21/14, H02K 1/14

(54) **Transducteur électromécanique biphasé et dispositif électromécanique comprenant au moins un tel transducteur**
Zweiphasen elektromechanischer Wandler und elektromechanischer Einrichtung mit wenigstens einem solchen Wandler
Two-phase electromechanical transducer and electromechanical device with at least one of such transducer

(43) Date de publication de la demande: 10.06.1998
(73) Titulaire: ETA SA Manufacture Horlogère Suisse, 2540 Grenchen (CH)
(72) Inventeur: Dano, Taghezout, 1110 Morges (CH)
(74) Mandataire: Balsters, Robert

(56) Documents cités:
- EP-A- 0 393 606
- EP-A- 0 698 957
- PATENT ABSTRACTS OF JAPAN vol. 005, no. 066 (E-055), 2 Mai 1981 & JP 56 015154 A (RHYTHM WATCH CO LTD), 13 Février 1981,

## Description

La présente invention concerne un transducteur électromécanique biphasé dont le stator présente une structure plane et dont le rotor comporte un aimant permanent, notamment bipolaire. En particulier, la présente invention concerne des transducteurs électromécaniques de petites dimensions, notamment adaptés aux applications horlogères.

Il est connu des documents EP 0 393 606 un dispositif électromécanique formé de deux transducteurs biphasés dont les stators respectifs sont formés par une plaque commune en matériau magnétique. Cette plaque commune sert notamment au montage de divers éléments du dispositif électromécanique et notamment au montage d'une plaque de rigidification de la plaque commune aux deux transducteurs biphasés.

Premièrement, il est à noter que l'homme du métier connaît des transducteurs biphasés semblables aux deux transducteurs biphasés du dispositif électromécanique décrit dans ce document. Ces transducteurs électromécaniques sont caractérisés, comme cela apparaît à la figure 1 du document EP 0 393 606, par le fait que le stator définit trois pôles magnétiques statoriques dont deux sont reliés magnétiquement aux premières extrémités de deux noyaux portant respectivement deux bobines et le troisième est relié aux deuxièmes extrémités de ces deux noyaux. A cet effet, le troisième pôle présente un bras central agencé entre les deux noyaux et s'étendant à une extrémité de manière à former deux oreilles de contact magnétiques pour lesdites deuxièmes extrémités des deux noyaux.

Comme il ressort du dispositif électromécanique décrit dans le document susmentionné, il est prévu d'étendre un des deux pôles magnétiques statoriques reliés à une première extrémité d'un des deux noyaux de manière à utiliser la structure plane formant le stator de ce transducteur pour le montage de divers éléments de ce dispositif électromécanique, notamment d'un tube servant au montage d'aiguilles servant d'indicateur analogique. De plus, le document EP 0 393 606 propose l'agencement de deux transducteurs biphasés ayant en commun un pôle magnétique statorique, lequel s'étend pour former une plaque de base servant au montage de divers éléments comme cela vient d'être décrit.

Le dispositif électromécanique décrit dans le document susmentionné présente deux inconvénients majeurs. Premièrement, la plaque de base servant à former les deux stators des deux transducteurs biphasés est fragile, les troisièmes pôles magnétiques statoriques susmentionnés pouvant facilement être pliés, entraînant ainsi en flexion les noyaux des transducteurs biphasés portant les bobines d'alimentation. Ensuite, les pôles magnétiques statoriques non communs aux deux transducteurs peuvent subir par déformation de la plaque de base formant stator une rotation dans le plan général de cette plaque. Pour pallier ces problèmes de rigidité de la plaque formant les stators des deux transducteurs biphasés, le document susmentionné prévoit une plaque de renforcement pour rigidifier le dispositif électromécanique représenté partiellement à la figure 1 de ce document.

Deuxièmement, l'agencement du dispositif électromécanique selon le document EP 0 393 606 est très limitatif pour le constructeur, notamment le constructeur horloger. En effet, quatre bobines d'alimentation sont situées en périphérie de la plaque formant les deux stators. Ainsi, le pôle magnétique statorique commun aux deux transducteurs qui s'étend pour servir au montage de divers éléments ne peut occuper qu'une région restreinte étant donné que les bobines d'alimentation sont situées à l'extérieur de la plaque formant les stators des deux transducteurs. On notera que le problème est identique pour un dispositif électromécanique comprenant un seul transducteur biphasé du type décrit ici. En effet, les deux bobines d'alimentation étant situées à l'extérieur de la plaque statorique, le premier ou deuxième pôle magnétique statorique ne peut s'étendre que dans une direction donnée. Le constructeur d'un tel dispositif mécanique est donc restreint dans ses possibilités de conception et d'agencement des divers éléments du dispositif comprenant un ou plusieurs transducteurs biphasés du type décrit ci-avant. Ceci est particulièrement critique pour des dispositifs devant être confinés dans un espace relativement restreint, notamment dans un boîtier d'une montre. Le constructeur horloger doit tenir compte de l'encombrement des mouvements horlogers qu'il conçoit et l'agencement du transducteur électromécanique est un problème réel auquel il est constamment confronté dans les réalisations de montres à quartz analogiques.

Le document EP-A-0698957 décrit un transducteur électromécanique comportant deux rotors définissant deux transducteurs biphasés joints avec l'économie d'une bobine dont la bobine commune est située dans une ouverture du stator fermée sur elle-même.

Le but de la présente invention est de pallier les inconvénients décrits ci-avant.

A cet effet, la présente invention concerne un transducteur électromécanique comprenant :
- un stator en matériau magnétique;
- un rotor comprenant un aimant permanent;
- deux bobines;
ledit stator comprenant une structure plane et des premier et deuxième noyaux autour desquels sont respectivement montées lesdites deux bobines, la structure plane définissant des premier, deuxième et troisième pôles magnétiques statoriques dont les trois épanouissements polaires respectifs définissent un trou traversé par le rotor dont l'aimant permanent est couplé magnétiquement aux trois épanouissements polaires. Les premier et deuxième noyaux relient respectivement les premier et deuxième pôles magnétiques statoriques au troisième pôle magnétique statorique. Ce transducteur est caractérisé en ce que les deux bobines sont situées à l'intérieur d'une ouverture statorique prévue dans la structure plane relativement à une projection dans le plan général de cette structure plane, le bord de cette ouverture statorique étant fermé sur lui-même.

Grâce aux caractéristiques du transducteur électromécanique selon l'invention, le stator est rigidifié sans l'apport d'éléments supplémentaires et la structure plane peut s'étendre dans toutes les directions selon les besoins du constructeur. En particulier, le rotor et les bobines du transducteur biphasé peuvent être agencés librement dans une région quelconque choisie selon les impératifs de construction du dispositif auquel le transducteur électromécanique biphasé est associé.

La partie de la structure plane susmentionnée définissant le troisième pôle magnétique statorique entoure, en projection dans le plan général de cette structure plane, l'ensemble formé par deux parties de cette structure plane définissant respectivement les premier et deuxième pôles magnétiques et par les deux bobines susmentionnées.

Grâce à cette caractéristique particulière, le trou traversé par le rotor du transducteur peut être prévu à n'importe quel endroit de la structure plane définissant le stator et non seulement en périphérie de cette structure plane.

La présente invention concerne en deuxième lieu un dispositif électromécanique comprenant une pluralité de transducteurs électromécaniques dont la pluralité de stators respectifs sont formés partiellement par une structure plane commune définissant une pluralité de trous traversés respectivement par une pluralité de rotors de ladite pluralité de transducteurs électromécaniques, ce dispositif électromécanique étant caractérisé en ce qu'au moins un de la pluralité de transducteurs est selon le transducteur de l'invention décrit ci-avant.

La présente invention sera décrite en détail ci-après à l'aide de la description suivante, faite en référence aux dessins annexés donnés à titre d'exemples nullement limitatifs, dans lesquels :
- la figure 1 représente schématiquement une vue de dessus du transducteur électromécanique biphasé selon l'invention;
- la figure 2 est une vue de dessus d'un premier mode de réalisation d'un dispositif électromécanique selon l'invention, et
- la figure 3 est une vue de dessus schématique d'un deuxième mode de réalisation d'un dispositif électromécanique selon l'invention.

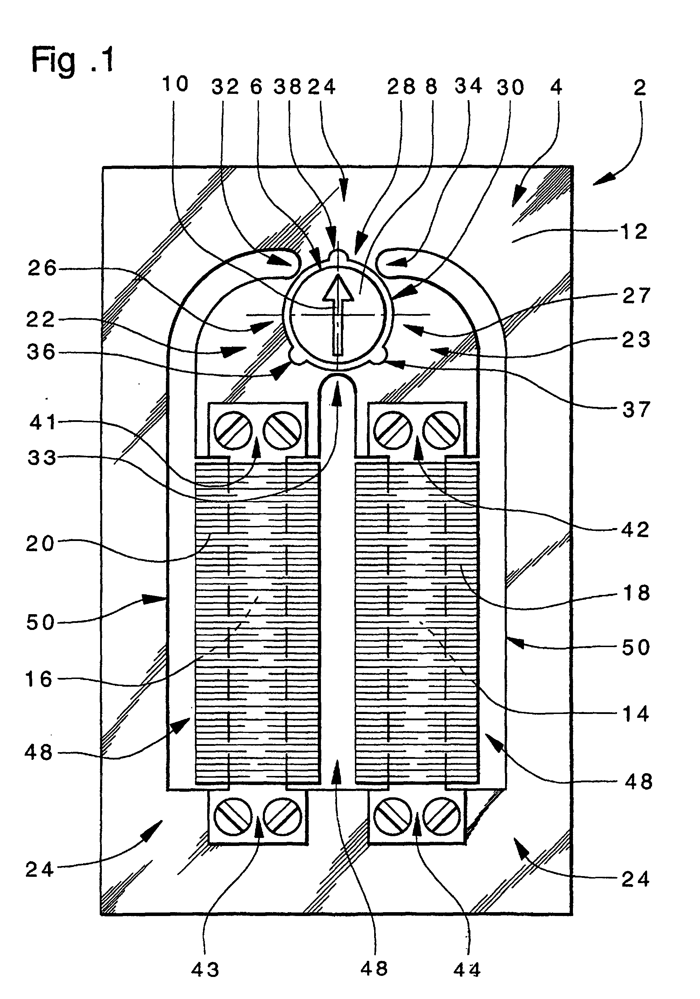

Sur la figure 1, le transducteur électromécanique biphasé 2 comprend un stator 4 en matériau magnétique et un rotor 6 dont seul l'aimant permanent bipolaire 8 a été représenté pour simplifier les dessins, l'axe magnétique de cet aimant permanent bipolaire étant représenté par la flèche 10. Le stator 4 comprend une structure plane 12 en matériau magnétique doux et deux noyaux 14 et 16 portant respectivement deux bobines d'alimentation 18 et 20. La structure plane 12 définit trois pôles magnétiques statoriques 22, 23 et 24 dont les trois épanouissements respectifs 26, 27 et 28 définissent un trou 30 dans la plaque statorique 12 à l'intérieur duquel est agencé l'aimant permanent bipolaire 8. Les trois pôles magnétiques statoriques 22, 23 et 24 sont séparés l'un des autres aux moyens d'isthmes de haute réluctance 32, 33 et 34. Dans la variante représentée sur cette figure 1, il est prévu trois encoches de positionnement 36, 37 et 38 sur le bord du trou 30.

L'aimant permanent 8 est couplé magnétiquement aux trois pôles magnétiques statoriques au moyen des trois épanouissements polaires. Les noyaux 14 et 16 sont reliés à leur première extrémité 41, 42 respectivement aux deux pôles magnétiques statoriques 22 et 23. Alors que les deuxièmes extrémités 43 et 44 de ces deux noyaux sont toutes deux reliées au troisième pôle magnétique statorique 24 servant à la fermeture des flux magnétiques se propageant dans les noyaux 14 et 16.

Les deux bobines 18 et 20 sont situées, en projection dans le plan général de la structure plane 12, à l'intérieur d'une ouverture statorique 48 prévue dans la structure plane 12. Le bord 50 de l'ouverture statorique 48 est fermé sur lui-même. De plus, l'ouverture statorique 48 définit partiellement les deux pôles magnétiques statoriques 22 et 23.

Selon une caractéristique préférée, la partie de la structure plane 12 définissant le pôle magnétique statorique 24 entoure, en projection dans le plan général de cette structure plane 12, l'ensemble formé par les deux parties de cette structure plane qui définissent respectivement les pôles magnétiques statoriques 22 et 23 et par les deux bobines 18 et 20. Ainsi, le trou 30 et l'aimant permanent 8 situés à l'intérieur sont également entourés par le pôle magnétique statorique 24. En plus des avantages d'agencement d'un tel transducteur dans un dispositif électromécanique et de rigidité d'un tel transducteur, la partie de la plaque statorique 12 définissant le pôle magnétique statorique 24 forme un blindage magnétique du transducteur étant donné que les flux magnétiques extérieurs se propageant dans le plan de la structure plane 12 sont conduits par le pôle magnétique statorique 24 sans couplage avec l'aimant permanent 8, quelle que soit la direction de propagation de ce flux magnétique extérieur.

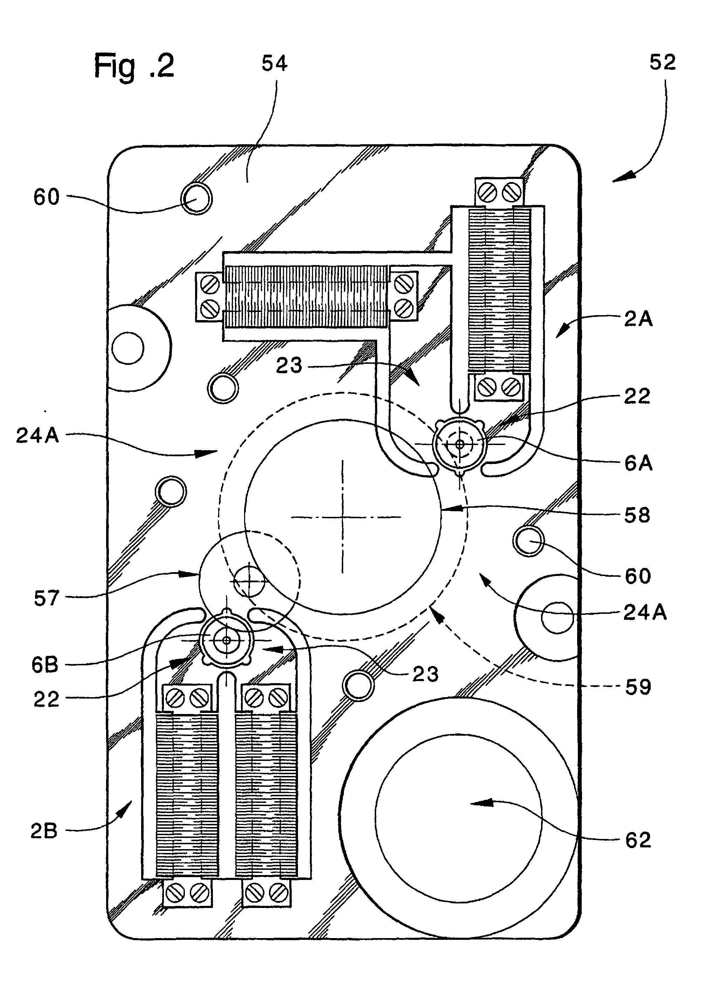

A l'aide de la figure 2, on décrira un premier mode de réalisation d'un dispositif électromécanique selon l'invention.

Le dispositif électromécanique 52 comprend une plaque de base ou platine 54 en matériau magnétique doux servant à former conjointement les stators respectifs de deux transducteurs électromécaniques biphasés 2A et 2B, tous deux similaires au transducteur décrit ci-avant à l'aide de la figure 1. Ces transducteurs 2A et 2B ne seront pas décrits à nouveau ici en détail.

Le pôle magnétique statorique 24A commun aux deux transducteurs 2A et 2B forme le pôle magnétique statorique de chacun de ces deux transducteurs qui entourent, en projection dans le plan général de la platine 54, les pôles magnétiques statoriques 22 et 23 de chacun de ces deux transducteurs qui ont été décrits précédemment. Le pôle magnétique statorique commun 24A sert donc à la fermeture des flux magnétiques des deux transducteurs 2A et 2B qui sont pourtant découplés magnétiquement l'un de l'autre.

L'homme du métier comprend tout de suite que la platine 54 peut servir de plaque statorique pour une pluralité de transducteurs électromécaniques biphasés selon l'invention. De plus, l'agencement de chaque transducteur dans la surface définie par la platine 54 est libre et déterminé par le constructeur du dispositif électromécanique selon l'invention. La platine 54 sert au montage, au moins partiellement, de plusieurs éléments, notamment des mobiles 57, 58 et 59. Les mobiles 57 et 59 sont respectivement couplés mécaniquement aux rotors respectifs 6A et 6B des deux transducteurs 2A et 2B.

De manière classique, la platine 54 comprend des trous de construction 60, filetés ou non, servant au montage de divers éléments. De plus, la platine 54 présente un enfoncement (ou un évidement) pour loger une pile d'alimentation des transducteurs 2A et 2B étant donné que, dans le cas décrit ici, ils sont utilisés comme moteur d'entraînement des mobiles 57, 58 et 59.

On notera que les rotors 6A et 6B sont montés tête-bêche, c'est-à-dire qu'ils sont montés dans des sens de construction opposés l'un à l'autre. Ainsi, selon une construction similaire à celle décrite dans le document EP 0 393 606, les deux transducteurs entraînent deux aiguilles montées coaxialement l'une à l'autre.

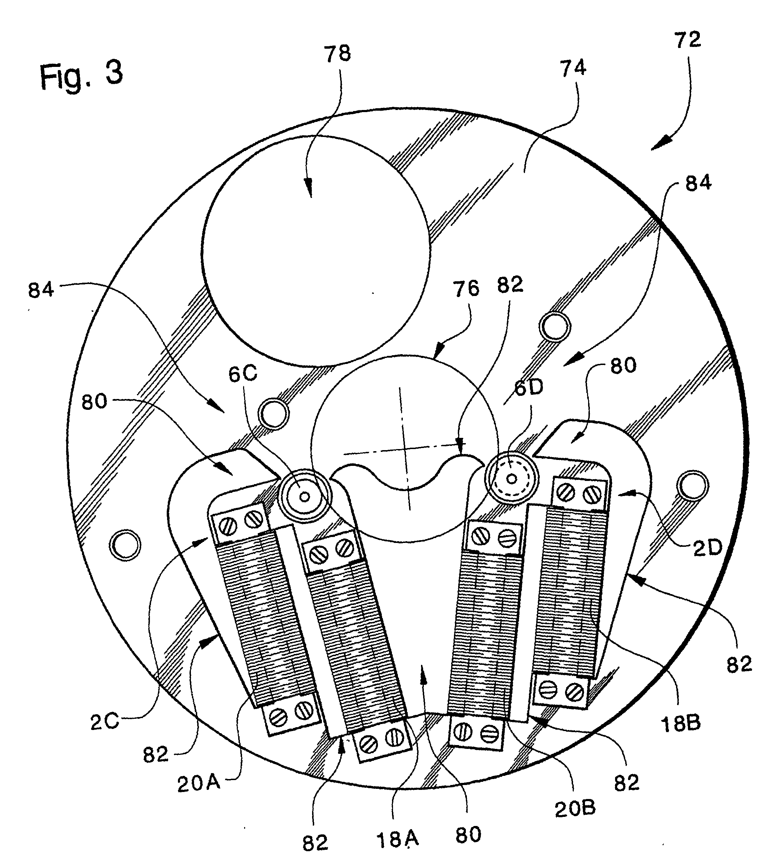

A l'aide de la figure 3, on décrira ci-après un deuxième mode de réalisation du dispositif électromécanique selon l'invention.

Le dispositif électromécanique 72 comprend une platine ou plaque de base 74 formée d'un matériau magnétique. Cette plaque de base 74 forme les stators respectifs de deux transducteurs électromécaniques biphasés 2C et 2D de construction équivalentes au transducteur décrit ci-avant à l'aide de la figure 1. Les deux rotors 6C et 6D des deux transducteurs respectifs sont couplés mécaniquement à deux mobiles 76 coaxiaux et disposés de part et d'autre de la platine 74. Une ouverture 78 est prévue dans la platine 74 pour y loger une pile d'alimentation. Les transducteurs biphasés 2C et 2D ne seront pas décrits à nouveau ici en détail.

Ce deuxième mode de réalisation d'un dispositif électromécanique se distingue essentiellement du premier mode de réalisation décrit à l'aide de la figure 2 en ce que les deux transducteurs biphasés 2C et 2D ont leurs bobines 18A, 20A, 18B et 20B situées, en projection dans le plan général de la platine 74 formant stator, à l'intérieur d'une seule et même ouverture statorique 80 dont le bord 82 est fermé sur lui-même. Le pôle magnétique statorique 84 qui sert à la fermeture des flux magnétiques se propageant dans l'un quelconque des quatre noyaux entourés respectivement par les quatre bobines susmentionnées est un pôle magnétique commun aux deux transducteurs 2C et 2D. Ainsi, la platine 74 sert de stator commun aux deux transducteurs biphasés 2C et 2D comme dans le cas du premier mode de réalisation décrit à la figure 2.

La présente invention ne se limite pas aux modes de réalisation décrits ci-avant, l'homme du métier pouvant sans autre prévoir des variantes de construction et d'agencement des transducteurs en fonction des contraintes de construction des dispositifs électromécaniques. On notera notamment que les noyaux portant les bobines peuvent être courbes.

A titre d'exemple, les dispositifs électromécaniques décrits aux figures 2 et 3 forment des indicateurs analogiques servant à afficher la valeur d'au moins une variable déterminée. En particulier, la variable affichée par ces dispositifs électromécaniques est le temps.

## Revendications

1. Transducteur électromécanique biphasé (2) comprenant :
- un stator (4) en matériau magnétique;
- un rotor (6) comprenant un aimant permanent (8);
- deux bobines (18, 20);
ledit stator comprenant une structure plane (12) et des premier et deuxième noyaux (14, 16) autour desquels sont respectivement montées lesdites deux bobines, ladite structure plane définissant des premier, deuxième et troisième pôles magnétiques statoriques (22, 23, 24) dont les trois épanouissements polaires (26, 27, 28) respectifs définissent un trou (30) traversé par ledit rotor dont ledit aimant permanent est couplé magnétiquement auxdits trois épanouissements polaires, lesdits premier et deuxième noyaux reliant respectivement lesdits premier et deuxième pôles magnétiques statoriques (22, 23) audit troisième pôle magnétique statorique (24), ce transducteur étant **caractérisé en ce que** lesdites deux bobines sont situées à l'intérieur d'une ouverture statorique (48) prévue dans ladite structure plane relativement à une projection dans le plan général de cette structure plane, le bord (50) de ladite ouverture statorique étant fermé sur lui-même.

2. Transducteur électromécanique selon la revendication 1, **caractérisé en ce que** la partie de ladite structure plane (12) définissant ledit troisième pôle magnétique statorique (24) entoure, en projection dans ledit plan général de cette structure plane, l'ensemble formé par deux parties de cette structure plane définissant respectivement lesdits premier et deuxième pôles magnétiques statoriques (22, 23) et par lesdites deux bobines (18, 20).

3. Transducteur électromécanique selon la revendication 2, **caractérisé en ce que** ledit trou (30) traversé par ledit rotor (6) a un bord fermé sur lui-même, ce trou et ladite ouverture statorique définissant des isthmes (32, 33, 34) de haute réluctance isolant magnétiquement lesdits pôles magnétiques statoriques (22, 23, 24), ladite structure plane (12) étant constituée par une seule et même pièce.

4. Transducteur électromécanique (2A; 2B) selon l'une des revendications précédentes, **caractérisé en ce que** ledit stator définit une plaque de base ou une platine (54) sur laquelle sont montés au moins partiellement des éléments (57, 58, 59) d'un dispositif électromécanique (52) dont au moins un desdits éléments est couplé mécaniquement audit rotor (6A; 6B) dudit transducteur électromécanique.

5. Dispositif électromécanique (52; 72) comprenant une pluralité de transducteurs électromécaniques (2A, 2B; 2C, 2D) dont la pluralité de stators respectifs sont formés partiellement par une structure plane commune (54; 74) définissant une pluralité de trous traversés respectivement par une pluralité de rotors (6A, 6B; 6C, 6D) de ladite pluralité de transducteurs, ce dispositif électromécanique étant **caractérisé en ce qu'**au moins un de ladite pluralité de transducteurs est selon l'une des revendications 1 à 3.

6. Dispositif électromécanique selon la revendication 5, **caractérisé en ce que** ladite structure plane commune (54; 74) sert de plaque de base ou de platine sur laquelle sont montés au moins partiellement des éléments (57, 58, 59; 76) de ce dispositif électromécanique.

7. Dispositif électromécanique (72) selon la revendication 5, **caractérisé en ce que** chaque rotor (6A, 6B; 6C, 6D) de ladite pluralité de rotors est couplé mécaniquement à un desdits éléments dudit dispositif électromécanique.

8. Dispositif électromécanique (72) selon l'une des revendications 5 à 7, **caractérisé en ce qu'**au moins deux (2C, 2D) desdits transducteurs sont selon l'une des revendications 1 à 3, les noyaux de ces deux transducteurs et les bobines respectives (18A, 20A, 18B, 20B) qui les entourent étant agencés dans une seule et même ouverture (80) de ladite structure plane (74) commune à ces deux transducteurs.

9. Dispositif électromécanique selon l'une des revendications précédentes, **caractérisé en ce que** ce dispositif forme un indicateur analogique servant à afficher la valeur d'au moins une variable déterminée.

10. Dispositif électromécanique selon la revendication 9, **caractérisé en ce qu'**il forme le mouvement d'une pièce d'horlogerie, ladite au moins une variable affichée étant le temps.

## Claims

1. Two-phase electromechanical transducer (2) including:
- a stator (4) made of magnetic material;
- a rotor (6) including a permanent magnet (8) ;
- two coils (18, 20);
said stator including a planar structure (12) and first and second cores (14, 16) around which said two coils are respectively mounted, said planar structure defining first, second and third magnetic stator poles (22, 23, 24) whose respective polar expansions (26, 27, 28) define a hole (30) through which said rotor passes, the permanent magnet of such rotor being magnetically coupled to said three polar expansions, said first and second cores respectively connecting said first and second magnetic stator poles (22, 23) to said third magnetic stator pole (24), said transducer being **characterised in that** said two coils are situated within a stator hole (48) provided in said planar structure relative to a projection in the general plane of this planar structure, the edge (50) of said stator hole being closed on itself.

2. Electromechanical transducer according to claim 1, **characterised in that** the portion of the planar structure (12) defining said third magnetic stator pole (24) surrounds, in projection in the general plane of this planar structure, the unit formed by two parts of this planar structure respectively defining said first and second magnetic poles (22, 23) and by said two coils (18, 20).

3. Electromechanical transducer according to claim 2, **characterised in that** said hole (30) through which passes said rotor (6) has an edge closed on itself, said hole and said stator hole defining high reluctance necks (32, 33, 34) magnetically insulating said magnetic stator poles (22, 23, 24), said planar structure (12) being formed in a single piece.

4. Electromechanical transducer (2A; 2B) according to any of the preceding claims, **characterised in that** said stator defines a base plate (54) onto which elements (57, 58, 59) of an electromechanical device (52) are at least partially mounted, at least one of said element being mechanically coupled to said rotor (6A,;6B) of said electromechanical transducer.

5. Electromechanical device (52; 72) including a plurality of electromechanical transducers (2A, 2B; 2C, 2D) whose plurality of respective stators are partially formed by a common planar structure (54;74) defining a plurality of holes through which pass respectively a plurality of rotors (6A, 6B; 6C, 6D) of said plurality of electromechanical transducers, this electromechanical device being **characterised in that** at least one of the plurality of transducers is made according to one of claims 1 to 3.

6. Electromechanical device according to claim 5, **characterised in that** said common planar structure (54; 74) is used as a base plate onto which elements (57, 58, 59; 76) of said electromechanical device (52) are at least partially mounted.

7. Electromechanical device (72) according to claim 5, **characterised in that** each rotor (6A, 6B; 6C, 6D) of said plurality of rotors is mechanically coupled to one of said elements of said electromechanical device.

8. Electromechanical device (72) according to any of claims 5 to 7, **characterised in that** at least two (2C, 2D) of said transducers are made according any of claims 1 to 3, the respective cores and coils (18A, 20A, 18B, 20B) of said two transducers which surround them being arranged in one and the same hole (80) of said planar structure (74) common to those two transducers.

9. Electromechanical device according to any of the preceding claims, **characterised in that** said device forms an analog indicator for displaying the value of at least a determined variable.

10. Electromechanical device according to claim 9, **characterised in that** it forms the movement of a timepiece, said at least displayed variable being the time.

## Patentansprüche

1. Elektromagnetischer Zweiphasen-Wandler (2) mit:
- einem Stator (4) aus magnetischem Material,
- einem Rotor (6) mit einem Permanentmagneten (8),
- zwei Spulen (18, 20),
wobei der Stator eine ebene Struktur (12) und einen ersten und einen zweiten Kern (14, 16) aufweist, auf welchen jeweils eine der beiden Spulen befestigt ist,
wobei die ebene Struktur erste, zweite und dritte magnetische Statorpole (22, 23, 24) festlegt, deren drei entsprechende Polenden (26, 27, 28) ein Loch (30) definieren, durch welches der Rotor hindurchtritt, dessen Permanentmagnet magnetisch mit den drei Polenden gekoppelt ist, wobei der erste und zweite Kern den ersten bzw. zweiten magnetischen Statorpol (22, 23) mit dem dritten magnetischen Statorpol (24) verbinden, wobei der Wandler **dadurch gekennzeichnet ist, daß** die beiden Spulen im Inneren einer Statoröffnung (48) angeordnet sind, die in der ebenen Struktur relativ zu einem Vorsprung in der allgemeinen Ebene dieser ebenen Struktur vorgesehen ist, wobei der Rand (50) der Statoröffnung in sich geschlossen ist.

2. Elektromechanischer Wandler nach Anspruch 1, **dadurch gekennzeichnet, daß** der Abschnitt der ebenen Struktur (12), der den dritten magnetischen Statorpol (24) definiert, als Vorsprung in der allgemeinen Ebene der ebenen Struktur die Gesamtheit umschließt, die durch zwei Teile der ebenen Struktur, die den ersten bzw. den zweiten magnetischen Statorpol (22, 23) definieren, und die beiden Spulen (18, 20) gebildet wird.

3. Elektromechanischer Wandler nach Anspruch 2, **dadurch gekennzeichnet, daß** das Loch (30), durch das sich der Rotor (6) erstreckt, einen in sich geschlossenen Rand aufweist, wobei das Loch und die Statoröffnung Zungen (32, 33, 34) mit hoher Reluktanz definieren, die die magnetischen Statorpole (22, 23, 24) magnetisch isolieren, wobei die ebene Struktur (12) aus einem Stück besteht.

4. Elektromechanischer Wandler (2A; 2B) nach einem der vorhergehenden Ansprüche, **dadurch gekennzeichnet, daß** der Stator eine Grundplatte oder eine Platine (54) bildet, auf welcher wenigstens teilweise Elemente (57, 58, 59) einer elektromechanischen Vorrichtung (52) montiert sind, wovon wenigstens eines der Elemente mechanisch mit dem Rotor (6A; 6B) des elektromechanischen Wandlers gekoppelt ist.

5. Elektromechanische Vorrichtung (52; 72) mit mehreren elektromechanischen Wandlern (2A, 2B; 2C, 3D), deren mehrere entsprechende Statoren teilweise durch eine gemeinsame ebene Struktur (54; 74) gebildet sind, die mehrere Löcher definiert, durch welche sich mehrere Rotoren (6A, 6B; 6C, 6D) der mehreren Wandler erstrecken, wobei die elektromechanische Vorrichtung **dadurch gekennzeichnet ist, daß** wenigstens einer der mehreren Wandler nach einem der Ansprüche 1 bis 3 ausgestaltet ist.

6. Elektromechanische Vorrichtung nach Anspruch 5, **dadurch gekennzeichnet, daß** die gemeinsame ebene Struktur (54; 74) eine Einfassung für die Grundplatte oder die Platine bildet, auf der Elemente (57, 58, 59; 76) der elektromechanischen Vorrichtung zumindest teilweise montiert sind.

7. Elektromechanische Vorrichtung (72) nach Anspruch 5, **dadurch gekennzeichnet, daß** jeder Rotor (6A, 6B; 6C, 6D) der mehreren Rotoren mechanisch an eines der Elemente der elektromechanischen Vorrichtung gekoppelt ist.

8. Elektromechanische Vorrichtung (72) nach einem der Ansprüche 5 bis 7, **dadurch gekennzeichnet, daß** mindestens zwei (2C, 2D) der Wandler nach einem der Ansprüche 1 bis 3 ausgestaltet sind, wobei die Kerne der zwei Wandler und die entsprechenden Spulen (18A, 20A, 18B, 20B), die sie umgeben, in einer einzigen Öffnung (80) der ebenen Struktur (74) vorgesehen sind, die den beiden Wandlern gemeinsam ist.

9. Elektromechanische Vorrichtung nach einem der vorhergehenden Ansprüche, **dadurch gekennzeichnet, daß** die Vorrichtung einen analogen Zeiger bildet, der dazu dient, den Wert mindestens einer vorbestimmten Variable anzuzeigen.

10. Elektromechanische Vorrichtung nach Anspruch 9, **dadurch gekennzeichnet, daß** sie das Uhrwerk eines Zeitmeßgeräts bildet, wobei die wenigstens eine angezeigte Variable die Zeit ist.
